# EUROPEAN PATENT APPLICATION

(11) **EP 2 532 289 A1**
(43) Date of publication of application: **12.12.2012**
(21) Application number: 11169618.3
(22) Date of filing: 10.06.2011
(51) Int. Cl.: A47J 43/18

(54) **Food suspension device**

(71) Applicant: Nestec S.A., 1800 Vevey (CH)
(72) Inventor: Stokoe, Ian, 78343 Gaienhofen (DE); Luke, Patrick, 78462 Konstanz (DE); Gibson, Paul, Stockport, SK4 4AT (GB); McLeod, Chastity Prince, 78224 Singen (DE)

(57) **Abstract**

The present invention relates to a suspension device for suspending a food while cooking the food in an oven, the suspension device comprising a body having a first portion and a second portion, the first portion being configured to engage with a suspension location in the oven, the second portion being configured to hold the food, and wherein the first portion and/or the second portion has a thermal conductivity below 8 W/(mK).

## Description

### Technical field of the invention

The invention relates to a suspension device for holding or supporting a food while cooking, such as roasting, steaming or smoking. In particular the invention relates to a device for holding or supporting a food, such as meat or vegetables, which may be used during cooking without the risk of being burned by the suspension device.

### Background of the invention

When cooking food, for example, by roasting, steaming or smoking, in the home on a non-industrial scale, foods are traditionally placed on a plate and put in the oven or placed directly on the grill of, for example, a barbeque. This, however, results in uneven cooking because one side of the food is facing the plate and the other side is facing the heating element of the oven. The side of the food facing the heating element would be grilled and the side facing the plate would tend to be stewed or boiled. The term food is used for covering any type of food, including food crops, such as vegetables, or and/or red meat, such as beef, or white meat, such as poultry, fish and pork. The food may be processed, e.g. a chicken leg is separated from the rest of the body of the chicken, a piece of pork may be cut from a larger piece of meat from a pig etc.

In order to overcome this problem, the meat and/or the vegetables must be constantly supervised and rotated to avoid uneven roasting and to avoid the risk of burning the food. However, even if carefully supervised and regularly or constantly rotated, the food can still be unevenly roasted and burned.

US 5,730,046 describes a rack for grilling chicken legs in a barbecue or an oven. The rack comprises a metal surface having downwardly extending support members at both ends. The rack comprises a plurality of predetermined slots to hold chicken legs upside down. The support members position the rack at a spaced distance above a cooking source or fire providing sufficient space for the legs to hang vertically substantially perpendicular to the fire. The slots comprise a plurality of parallel apertures, each including a central circular aperture for insertion of the legs and a pair of narrow elongated slots leading in opposite directions from the circular aperture. In operation, the chicken legs are inserted through the circular aperture, slid along the slot, and locked in place by the bone at the lower joint. The rack provides a uniform cooking surface without burning the chicken legs. The disadvantage of using a rack is that all the chicken legs are cooked for the same amount of time even though there may be large size differences between them and therefore may require different cooking times. Furthermore, a steel rack is costly and requires storage space in the kitchen, and is only useful for chicken legs of a predetermined size.

US 4,753,216 and US 2004/0000303 describe a metal or steel hook for penetrating meat to be roasted. The hooks are sharpened at one end in order to penetrate the meat to be hanged and roasted. The disadvantage of using metal hooks, especially steel hooks, or metal racks as described above in US 5,730,046, is that metals typically have a high thermal conductivity and thus get very hot in the oven. Consumers may easily be burned when manipulating these hooks during and after cooking. Furthermore, the high thermal conductivity may cause local excessive cooking of the meat in those areas in close contact with the metal.

Hence, there is a need for an improved suspension device for holding foods during cooking, that overcomes, at least in part, the disadvantages of the prior art as described above, and which may be used in the home of the consumer, without the risk of burn injuries.

### Summary of the invention

Thus, an object of the invention relates to an improved suspension device for holding or supporting a food during cooking. The suspension device is designed for domestic use. The suspension device provided is low-cost, easy to use, and can be used without the risk of being burned by the suspension device while removing the food during or after cooking. Throughout the description cooking is used as a term including roasting, grilling, smoking, steaming or combinations thereof.

In particular, it is an object of the invention to provide a suspension device for holding or supporting a food, such as meat or vegetables, during cooking that has a low thermal conductivity and thus addresses, at least in part, the above mentioned problems of the prior art.

A first aspect of the invention relates to a suspension device for suspending a food while cooking the food in an oven. The suspension device may comprise a body having a first portion and a second portion. The first portion may be configured for engaging with a suspension location in the oven. The second portion may be configured for holding or supporting the food. The first portion and/or the second portion may have a thermal conductivity below 8 W/(mK), such as below 4 W/(mK), e.g. below 1 W/(mK), such as below 0.2 W/(mK).

The suspension device allows a piece of food, such as poultry, including a chicken leg, a turkey leg, a piece of chicken breast meat, or other meat such as a piece of pork, a fish or part of a fish, or a vegetable or other food, to be roasted, smoked, steamed or grilled in an oven such as a barbeque or an electric or gas oven. Further, the suspension device is configured to suspend the food from a suspension location in the oven, or cooking chamber. This further provides the advantage of reducing the transfer of heat from, for example, a baking tray or roasting pan, which are usually made from a metal or other similar materials having a high heat conductivity, and which may cause the food to be burned. By hanging the food substantially freely in air, the food is roasted so as to obtain a crispy outside and a juicy inside.

Advantageously the body of the suspension device is elongate, but the body may be generally oval, square, oblong, elliptical, round or have any suitable polygonal shape.

Further it is advantageous to provide a device that suspends a food without piercing the product. If a food is pierced there is a risk of transferring heat to the inside of the food during cooking thereby raising the temperature inside the food unintentionally.

It is advantageous that the first portion has a thermal conductivity below 8 W/(m x K), such as below 4 W/(m x K), e.g. below 1 W/(m x K) as this reduces the risk of the person handling the device being on contact with the suspension device, e.g. when removing the food from the device. Most non-metal materials have a thermal conductivity below 8 W/(m K), such as below 4 W/(m K), e.g. below 1 W/(m K). It may be advantageous to ensure that the second portion also has a thermal conductivity below 8 W/(m K), such as below 4 W/(m K), e.g. below 1 W/(m K). This would reduce local heating of the food thus ensuring that the product is not over cooked in the region of contact with the device. For comparison, polypropylene has a thermal conductivity of 0.25 W/(m K), glass has a thermal conductivity of 1.1 W/(m K), gold has a thermal conductivity of 318 W/(m K), and pure copper has a thermal conductivity of 401 W/(m K).

The term suspension device means that the device is intended to be used for suspending, or hanging, a piece of food while cooking the food.

Advantageously the second portion is flexible. If the second portion is flexible, damage caused by forces on the device when mounting the food is reduced or avoided altogether. The material used for the second portion is preferably non-metal as metal devices are usually not flexible. In order to hold a food using a metal suspension device, one end of the suspension device must be sharpened to penetrate the meat for holding. This leads to two problems. Firstly, it limits the use to bone-free meat, excluding chicken legs, chicken wings or turkey legs. Secondly, the sharp end of the suspension device may cause injuries when attaching the device to the food, e.g. meat.

Advantageously the first portion has flexible properties similar to that of the second portion. By providing a first portion having similar flexibility to that of the second portion a more uniform device is provided. This further reduces damage to the device when mounting the food. Further the flexibility of the first portion lowers the risk of the person handling the food is injured when attaching the suspension device to the food.

Advantageously the second portion defines a distal end and the suspension device includes an opening for receiving the distal end so as to establish a loop for holding the food. By providing an opening for receiving the distal end it is possible to establish a loop. Part of the food is located through the loop to hold the food in suspension during cooking. Further, by establishing the loop when holding the piece of food it is possible to establish a loop having a size appropriate to the food. This provides a better holding force on the food. Further, adaptable loop sizes are advantageous when used for odd or varying sized foods.

Advantageously the outer edge of the second portion includes a barbed portion. The barbed portion provides an improved gripping force of the distal end when inserted into the opening when establishing the loop.

Advantageously the second portion includes an opening configured for receiving the food. The opening may be a pre-shaped hole or cut-through area formed in the second portion. The opening may be a slit or have a part where, when the suspension device is not loaded with a food, the two sides of the opening abut. As the suspension device may be flexible, the opening may be easily opened to receive the food.

Advantageously the opening is a slit and/or an aperture having an area of more than 0.1 square mm. The opening may have the geometric shape of a slit initially before the food is inserted. The opening may also include non-straight lines as to provide a strengthened end or ends of aperture to prevent damage to the suspension device during attachment of food to the suspension device.

Advantageously the opening is defined by a straight line, a triangle wave line, a saw tooth wave line or a combination thereof. The opening may include lines that are not straight so as to provide a larger retention force on the food and thereby minimising the likelihood of the food falling off during cooking.

Advantageously the first part includes a hook part for engaging a grill rack, a ring, a bar or a combination thereof. The hook-shaped part allows the suspension device to be removably mounted to a bar of a rack in an oven.

Advantageously the elongate body includes a cellulose material, a coated cellulose material, a plastic material or any combination hereof. Manufacturing the suspension device from a non-metallic material provides the advantage that the person using the device will not be burned by contact with the device.

It is advantageous to manufacture the suspension device from a cellulose material as this allows the device to be recyclable and disposable. It is contemplated that a cellulose material allows the device to be relatively soft so that a person handling the device is not hurt by the device. It is advantageous to use a non-metallic material as many metals a have high thermal conductivity. This leads to the problems described above, namely local heating of the food and risk of burns to the hands and/or fingers of a person removing the device from e.g. an oven.

Advantageously the material used for the elongated body has sufficient strength to hold or support a product weighing in the range of 50 to 500 g.

Advantageously the first portion includes a foldable section so as to establish two hook parts for engaging the suspension location in the oven. The foldable section provides the possibility to establish a larger hook area so as to improve the force for holding the suspension device in the intended position while cooking.

Advantageously the oven is an electric oven, a gas oven or a grill. The use of the suspension device conveniently allows fixing various shapes of foods. Also, optimal usage of available oven space is obtained. Further the suspension device may be placed on a rack that is removable from the oven and not a usual part of the oven, e.g. an oven or a barbeque kettle.

Advantageously the second portion has a thermal conductivity less than 8 W/(mK), such as below 4 W/(mK), e.g. below 1 W/(mK). The low thermal conductivity is advantageous as the person removing the food is not burned by the suspension device if a finger or hand comes into contact during cooking or when the food is being removed from the suspension location in the oven. Further a low thermal conductivity reduces unintended roasting of the food in the contact area between the suspension device and the food.

The features and advantageous of the present invention may each be combined with any of the other features mentioned. These and other aspects of the invention will be apparent from and elucidated with reference to the embodiments described hereinafter.

### BRIEF DESCRIPTION OF THE FIGURES

Figure 1 shows a suspension device of the invention having a slit opening.
Figure 2 shows a suspension device of the invention having an alternative opening.
Figure 3 shows a suspension device of the invention having a slit opening.
Figure 3a shows a suspension device of the invention having a slit opening.
Figure 4 shows a suspension device of the invention having a key hole opening.
Figure 5 shows a suspension device of the invention having a barbed portion for forming a loop.
Figure 6 shows a web of 4 suspension devices of the invention having a bend line.
Figure 7 shows an alternative suspension device of the invention having a barbed portion for forming a loop.
Figure 8 shows a web of 4 suspension devices of the invention.
Figure 9 shows a web of 4 suspension devices of the invention having two hook parts.

### DETAILED DESCRIPTION

The suspension device according to the invention will now be described in more detail with reference to the accompanying figures. The figures show one way of implementing the present invention and are not to be construed as limiting the invention in any way. It is appreciated that other embodiments falling within the scope of the claims are contemplated as part of this invention.

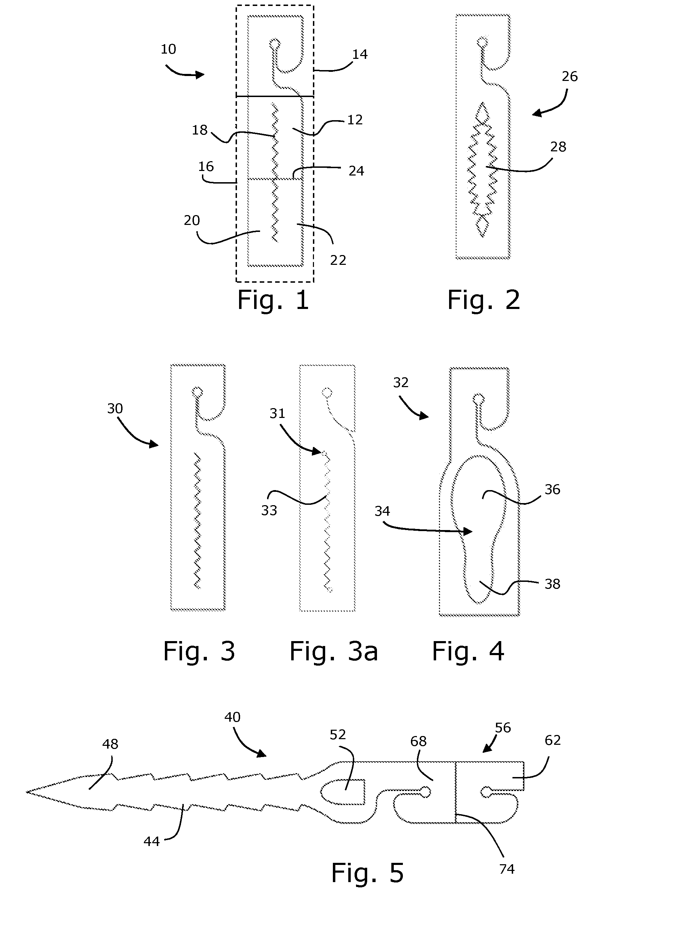

Fig. 1 schematically illustrates a suspension device 10 for suspending a food while cooking the food in an oven. The oven could be an electric or gas oven in a house hold, or a barbeque kettle, either gas or charcoal fired. The suspension device 10 comprises an elongate body 12 having a first portion 14 and a second portion 16. The first portion 14 is configured to engage a suspension location in the oven, and the second portion 16 is configured to hold the food. In the embodiment illustrated in Fig. 1, the first portion 14 is configured to engage a suspension location in the oven by establishing a hook portion. The hook portion engages a bar or ring inside the oven, e.g. a bar of a grill rack, not illustrated here. The size of the slit or opening in the first portion the leading to the area that is intended to engage the suspension location, e.g. a bar, may be as small as possible as this may lead to a more durable fit which in turn ensures that the food is not loosened and dropping off during cooking.

In the embodiment illustrated, the second portion 16 is flexible. This allows establishment of a food engagement part by creating a loop with the slit opening 18. As the second portion 16 is flexible, a person applying the suspension device 10 to a food, e.g. a piece of meat or vegetable, will use his or her fingers to separate the parts 20 and 22 so as to create an opening. This opening will then fit over a part of the food.

The first portion 14 is then secured to the intended area or suspension location, e.g. bar of a rack, a grill rack, a ring or a combination thereof. The rack carrying one or more foods is then introduced into the oven for roasting or smoking as discussed above. Alternatively the food, with the suspension device already attached, is hung or suspended from a suspension location in the oven. Further alternatively the suspension device is mounted at the suspension location in the oven and the food is then mounted or positioned at the second portion 16 of the suspension device 10. Each suspension device is configured to carry or suspend only one food. The method of using the suspension device applies generally to all embodiments of the suspension device.

The suspension device 10 includes a pre-bend line 24 to facilitate bending the device slightly when applying the device to a food. Also, the bending facilitates storing the device 10 in a smaller compartment than if the device 10 could not be bent.

Even though the suspension device 10 may be composed of several parts, the suspension device is preferably an integral device wherein the first portion 14 has flexible properties similar to that of the second portion 16.

Fig. 2 schematically illustrates a suspension device 26 having an opening 28. The opening 28 is an aperture having an area of more than 0.1 square mm so that the person using the device 26 may place the food in the intended position without having to both open a slit opening in the device 26 and place the food. The device 26 may first be placed in the oven, e.g. hung from a rack in an oven, and subsequently the food, e.g. the thin end of a chicken leg, may be placed in through the opening 28.

In Figs. 1, 2 and 3 the suspension devices illustrated all include the opening being defined by saw tooth wave lines, at e.g. 18 in Fig. 1. It is contemplated that such a saw tooth wave line provides a firmer grip on e.g. the bone of a chicken leg. In other embodiments the opening may be defined by straight lines, triangle wave lines or a combination thereof.

Fig. 3 schematically illustrates a suspension device 30. The device 30 is similar to that of Fig. 1 but without a pre-bend line, therefore the device 30 is not discussed in detail.

Fig. 4 schematically illustrates a suspension device 32 having an opening 34. The opening has two main areas 36 and 38 resembling a key hole shape. The area 36 has a larger maximum diameter compared to the maximum diameter of the area 38, measured in a transverse direction relative to the longitudinal body of the device 32. The larger area 36 facilitates the insertion of e.g. a chicken leg while the smaller area 38 provides a firm grip on the chicken leg when the chicken leg is suspended inside the oven.

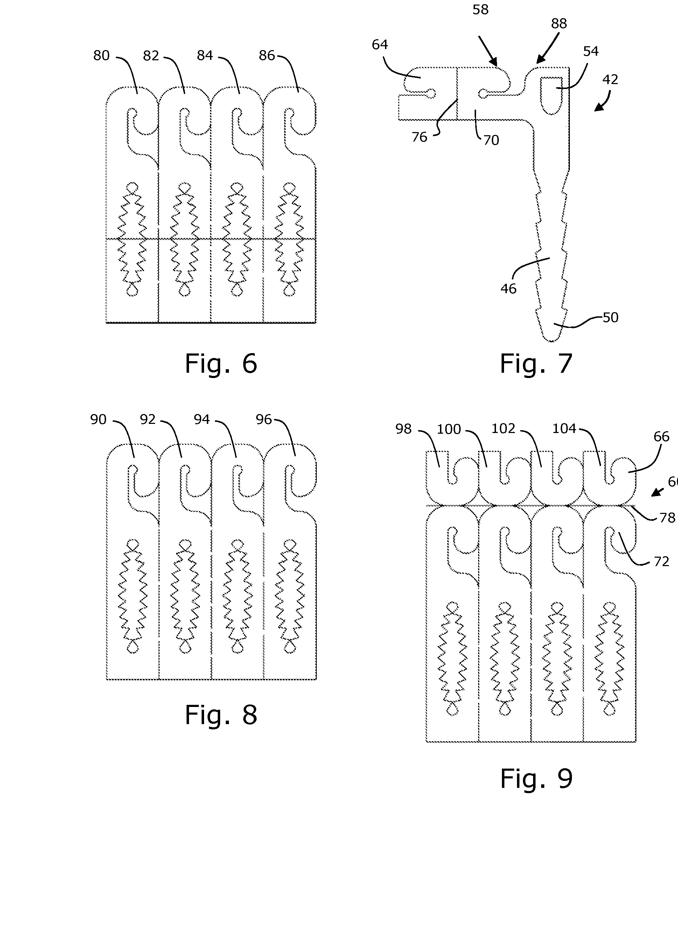

In Figs. 5 and 7 embodiments of a suspension device or element 40 and 42 respectively are illustrated. The second portion 44, 46 defines a distal end 48, 50 and the suspension device 40, 42 includes an opening 52, 54 for receiving the respective distal end 48, 50 so as to establish a loop for holding the food. This allows a person applying the device 40, 42 to a food to define the size of the loop so as to fit the specific food best.

In the suspension device 40, 42, the outer edge of the second portion 44, 46 includes barbed portions. These barbed portions are configured to engage the sides of the openings 52 and 54 so as to establish a firm loop. The size of one barb is at the largest location slightly above the size of the opening 52, 54. As the second portion of the device 40, 42 is flexible the second portions may be squeezed to reduce the width, while inserting the second portion 44, 46 into the opening 52, 54.

The embodiments of suspension devices illustrated in Figs. 5, 7 and 9 schematically illustrate the first portions 56, 58 and 60 each including a foldable section 62, 64, 66 so as to establish two hook parts for engaging the suspension location in the oven as described above. The person using the device may then bend the foldable section 62, 64, 66 towards the part 68, 70, 72 by pivoting around the line 74, 76, 78. The line 74, 76, 78 may be established by pre-bending or stamping. The foldable section 62, 64, 66 provides the possibility to establish a larger hook area so as to improve the force for holding the suspension device in the intended position while roasting as both part 62, 64, 66 and part 68, 70, 72 engage the suspension location in the oven, e.g. a bar or a rack in an oven.

Fig. 6 schematically illustrates four suspension devices 80, 82, 84 and 86. The devices 80, 82, 84 and 86 are manufactured from a blank and in the state illustrated in Fig. 6 form a web that may be supplied to the consumer for separation in e.g. the kitchen. Alternatively the devices may be separated and supplied to the consumer individually. All suspension devices 80, 82, 84 and 86 include a line, e.g. formed by stamping or pressing, which line facilitates bending of the suspension devices 80, 82, 84 and 86.

Fig. 7 as previously mentioned schematically illustrates a suspension device 42. Here the first portion 88 has a double hook part formed in a direction substantially perpendicular to the longitudinal direction of the second part 46. When a loop is formed by inserting the distal end 50 into the opening 54 the longitudinal axis of the food is orientated substantially in the direction defined by the foldable section 64 and the part 70. This is contemplated to introduce less stress in a perpendicular direction to the hook part formed by the foldable section 64 and the part 70.

Fig. 8 schematically illustrates four suspension devices 90, 92, 94 and 96. The devices 90, 92, 94 and 96 are manufactured from a blank and in the state illustrated in Fig. 8 form a web that may be supplied to the consumer for separation in e.g. the kitchen when preparing the food for roasting. Alternatively the devices may be separated and supplied to the consumer individually. The suspension devices 90, 92, 94 and 96 are generally similar to the embodiment illustrated in Fig. 2.

The embodiments in Fig. 2, 6, 8 and 9 all include a small area at the extreme ends of the openings, e.g. opening 28 in Fig. 2. These small areas help reduce the risk of tearing the suspension device when forcing a piece of the food through the opening. The small area may have a geometric shape similar to a circle, triangle, diamond, ellipsis or other geometry. The small area distributes the load from the sides being separated and thereby reduces the risk of tear. Fig. 3a schematically illustrates an embodiment of a suspension device where a circular area 31 is formed at the ends of the slit or opening 33.

Fig. 9 schematically illustrates four suspension devices 98, 100, 102 and 104. The devices 98, 100, 102 and 104 are manufactured from a blank and in the state illustrated in Fig. 9 form a web that may be supplied to the consumer for separation in e.g. the kitchen when preparing the food for roasting. Alternatively the devices may be separated and supplied to the consumer individually.

The opening in the suspension device where the food is to be placed may include a part that is only partially open, where the remainder of the opening is optionally openable for the user, e.g. via a tear-line and/or perforations.

Generally the elongate body of the suspension device according to the present invention may include a cellulose material, a coated cellulose material, a plastic material or any combination hereof. It is advantageous to manufacture the suspension device from a non-metallic material as this avoids the risk of the person using the device being burned by heated metal. Further it is advantageous to manufacture the suspension device from a cellulose material as this allows the device to be recyclable and also disposable. It is contemplated that a cellulose material allows the device to be relatively soft so that a person handling the device is not hurt by the device. It is advantageous to use a non-metallic material as many metals (including steel) have a high thermal conductivity which leads to the problems as described above

The suspension device according to the invention has proven especially suitable for foods having a weight in the range of approximately 150 g to 350 g, but other sizes of foods may be used.

As mentioned it is advantageous that the second portion has a thermal conductivity less than 8 W/(mK), such as below 4 W/(mK), e.g. below 1 W/(mK). This generally includes all non-metal materials, including polymers, ceramics, glass, graphite, rubbers and combinations thereof. It is preferable that the material is heat resistant up to around 250 degrees C as this is the usual maximum temperature of a common domestic oven. Slightly higher temperatures may be obtained in a barbeque kettle.

Although the invention has been described with reference to specified embodiments, the invention should not be construed as being in any way limited by those embodiments. The scope of the invention is defined by the accompanying claims. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A suspension device for suspending a food during cooking of the food in an oven, the suspension device comprising:
a body having a first portion and a second portion,
the first portion being configured to engage with a suspension location in the oven,
the second portion being configured to hold the food, and
wherein the first portion and/or the second portion has a thermal conductivity below 8 W/(mK).

2. The suspension device according to claim 1, wherein the second portion is flexible.

3. The suspension device according to claim 1 or claim 2, wherein the first portion and the second portion are both flexible.

4. The suspension device according to any one of claims 1-3, wherein the second portion has a distal end and the suspension device includes an opening for receiving the distal end so as to establish a loop for holding the food.

5. The suspension device according to claim 4, wherein the outer edge of the second portion includes a barbed portion.

6. The suspension device according to any one of claims 1-3, wherein the second portion includes an opening configured to receive the food.

7. The suspension device according to claim 6, wherein the opening is a slit and/or an aperture having an area of more than 0.1 square mm.

8. The suspension device according to claim 6 or claim 7, wherein the opening is defined by a straight line, a triangle wave line, a saw tooth wave line or a combination thereof.

9. The suspension device according to any one of claims 1-8, wherein the first portion includes a hook part for engaging with the suspension location in the oven.

10. The suspension device according to any one of claims 1-9, wherein the suspension location in the oven is a grill rack, a ring, a bar or a combination thereof.

11. The suspension device according to any one of claims 1-10, wherein the body includes a cellulose material, a coated cellulose material, a plastic material or any combination thereof.

12. The suspension device according to any one of claims 1-11, wherein the first portion includes a foldable section so as to establish two hook parts for engaging the suspension location in the oven.

13. Use of a suspension device for cooking food.

14. Use according to claim 13, wherein the suspension device include any of the features mention in the claims 1-12.
